# EUROPÄISCHE PATENTSCHRIFT

(11) **EP 4 004 403 B1**
(45) Veröffentlichungstag und Bekanntmachung des Hinweises auf die Patenterteilung: **07.06.2023**
(21) Anmeldenummer: 20726694.1
(22) Anmeldetag: 08.05.2020
(51) Int. Cl.: F16G 15/04

(54) **BLOCKSCHLOSS MIT KURZEM VERRIEGELUNGSWEG**
BLOCK LOCK HAVING SHORT LATCHING PATH
BLOC DE VERROUILLAGE À TRAJET DE VERROUILLAGE COURT

(30) Priorität: 29.07.2019 DE 202019104163 U
(43) Veröffentlichungstag der Anmeldung: 01.06.2022
(73) Patentinhaber: Thiele GmbH & Co. KG, 58640 Iserlohn (DE)
(72) Erfinder: QUINTING, Janis, 58708 Menden (DE)
(74) Vertreter: Osterhoff, Utz
(86) Internationale Anmeldenummer: PCT/DE2020/100389
(87) Internationale Veröffentlichungsnummer: WO 2021/018335

(56) Entgegenhaltungen:
- WO-A1-2004/097253
- DE-A1- 1 815 409
- DE-A1-102015 117 860
- DE-A1-102016 108 051
- DE-U1- 20 008 845

## Beschreibung

Die vorliegende Erfindung betrifft eine Blockschlossanordnung zur Verbindung zweier Kettenenden mit den Merkmalen im Oberbegriff von Anspruch 1.

Aus dem Stand der Technik sind Blockschlossanordnungen mit Blockschlössern bekannt, um die Enden zweier Ketten miteinander zu verbinden. Solche Blockschlösser werden insbesondere in der Bergbauindustrie bzw. in der Fördertechnik eingesetzt. Hier laufen Ketten in sogenannten Kettenförderern. Bei Wartungsarbeiten, Austausch der Kette oder ähnlichem, muss somit ein Blockschloss innerhalb der Rinne eines Kettenförderers entriegelt bzw. verriegelt werden.

Gattungsbildende Blockschlossanordnungen sind beispielsweise aus der DE 10 2010 034 394 A1, der DE 200 08 845 U1 oder der DE 20 2006 006 731 U1 bekannt.

Ein solches Blockschloss besteht aus zwei Blockschlosshälften, die im Wesentlichen spiegelsymmetrisch bzw. komplementär zueinander ausgebildet sind und zur Verriegelung ineinandergesetzt werden.

Aufgabe der vorliegenden Erfindung ist es, ein solches Blockschloss weiterzubilden, dergestalt, dass es einen kürzeren Verriegelungsweg aufweist.

Die vorgenannte Aufgabe wird erfindungsgemäß mit einer Blockschlossanordnung zur Verbindung zweier Kettenenden mit den Merkmalen im Anspruch 1 gelöst.

Vorteilhafte Ausgestaltungsvarianten sind Gegenstand der abhängigen Ansprüche.

Die erfindungsgemäße Blockschlossanordnung weist ein Blockschloss zur Verbindung zweier Kettenenden und mindestens ein damit gekoppeltes Kettenglied auf, wobei das Blockschloss im verriegelten Zustand zwei gegenüberliegende sich in Längsrichtung erstreckende Blockschlosshälften aufweist, welche formschlüssig über je einen Zapfen und eine Zapfenaufnahme ineinandergreifen und unter Ausbildung mindestens einer Aufnahmeöffnung, bevorzugt zweier Aufnahmeöffnungen, zur Aufnahme eines Kettengliedes verriegeln und dass die Blockschlosshälften an ihren Enden kammartig ineinandergreifen, dadurch gekennzeichnet, dass beide Blockschlosshälften über einen Verschiebeweg in Längsrichtung miteinander verriegelt werden, wobei der Verschiebeweg kleiner 10% des Durchmessers eines Kettengliedes ist.

Erfindungsgemäß zeichnet sich das Blockschloss nunmehr dadurch aus, dass an den Blockschlosshälften kein überstehender Vorsprung mit einem zusätzlichen Nocken oder ähnlichem ausgebildet ist. Im Gegensatz dazu greifen erfindungsgemäß die Enden der Blockschlosshälften kammartig ineinander. Die Kammrichtung des kammartigen Ineinandergreifens ist dabei in der Längsrichtung der Blockschlosshälften ausgebildet.

Somit ist im verriegelten Zustand der Eingriff und damit die Zugkraftübertragung in Längsrichtung gegeben durch den jeweiligen Zapfen und die Zapfenaufnahme. Damit das Blockschloss jedoch zunächst verriegelt werden kann, ist der Verriegelungsweg in Längsrichtung ausschließlich bestimmt durch den Zapfen und die Zapfenaufnahme und nicht wie im Stand der Technik durch zusätzliche Überstände, Vorsprünge bzw. Nocken. Insgesamt kann damit eine deutliche Verringerung des Verriegelungsweges in Längsrichtung erreicht werden, bei gleichzeitig hoher Sicherheit des Verriegelungszustandes sowie der Übertragung der Zugkraft in Kettenlängsrichtung bzw. Längsrichtung des Blockschlosses. Die Blockschlosshälften können somit zunächst quer zur Längsrichtung ineinandergesetzt werden. Hierbei kämmen die Enden bereits zumindest teilweise ineinander. Im Anschluss daran wird ein Verschiebeweg bzw. Verriegelungsweg in Längsrichtung durchgeführt, so dass Zapfen und Zapfenaufnahme miteinander formschlüssig in Eingriff kommen. Dieser Verschiebeweg in Längsrichtung ist kleiner 10 %, bevorzugt kleiner 8 % und ganz besonders bevorzugt kleiner 6 %, bezogen in Relation auf den Durchmesser eines entsprechenden Kettengliedes. Der Durchmesser bezieht sich insbesondere auf den Durchmesser, den das Kettenglied in seiner Rundung aufweist. Hierbei handelt es sich bevorzugt um eine Rundstahlgliederkette. Der Verschiebeweg sollte jedoch größer 0,5 %, insbesondere größer 1 % des Durchmessers sein. Die Durchmesserangaben werden üblicherweise in Millimetern vorgenommen. Der Verschiebeweg beträgt dann den prozentualen Anteil an dieser Durchmesserangabe in Millimetern.

Bevorzugt ist zur Ausbildung des kammartigen Ineinandergreifens an jeder Blockschlosshälfte an einem Ende eine Verlängerung angeordnet. Die Verlängerung ist als mindestens zwei, insbesondere drei kammartige Gabelfortsätze ausgebildet. Diese Verlängerung ist besonders bevorzugt unterhalb des Zapfens angeordnet. Die Verlängerung erstreckt sich in Längsrichtung gegenüber dem Zapfen.

An dem anderen freien Ende der Blockschlosshälfte ist ein Fortsatz ausgebildet, insbesondere sind zwei Fortsätze parallel nebeneinander angeordnet ausgebildet. Die Fortsätze sind in Längsrichtung hinter der Zapfenaufnahme angeordnet und stehen quer zur Längsrichtung gegenüber der Zapfenaufnahme über.

Werden nun die zwei Blockschlosshälften miteinander in Eingriff gebracht, so greifen die Fortsätze und die Gabelfortsätze kämmend ineinander.

Die Fortsätze und Gabelfortsätze sind insbesondere derart ausgebildet, dass bei vollständig verriegelten Blockschlosshälften deren jeweilige Längsschnittfläche im Wesentlichen gleich ausgebildet ist.

Besonders bevorzugt kann dann ein jeweiliges Verriegelungsmittel die ineinander gekämmten Fortsätze und Gabelfortsätze durchgreifend angeordnet werden. Dies sind insbesondere ein Passbolzen bzw. Verriegelungsbolzen. Das Verriegelungsmittel ist insbesondere quer zur Längsrichtung die Fortsätze und Gabelfortsätze durchgreifend angeordnet.

Im Ergebnis kann somit ein Blockschloss bereitgestellt werden, das in Längsrichtung einen besonders kurzen Verriegelungsweg aufweist. Insbesondere weist der Zapfen eine Schräge auf, die in einem Winkel zwischen 4 bis 8, bevorzugt zwischen 5 bis 7, und ganz besonders bevorzugt von ca. 6 Grad zu einer Orthogonalen zur Längsrichtung angeordnet ist. Der Zapfen greift somit in die Zapfenaufnahme, welche eine komplementäre Schräge aufweist. Durch diese Schräge ist sichergestellt, dass sich die zwei Blockschlosshälften im verriegelten Zustand bei Beaufschlagung mit einer Zugkraft, nicht quer zur Längsrichtung voneinander lösen. Durch die Schräge ist ferner sichergestellt, dass die beiden Blockschlosshälften bei Beaufschlagung mit einer Zugkraft in Längsrichtung, sich quer zur Längsrichtung aufeinander zu drücken.

Der Verriegelungsweg in Längsrichtung ist somit maßgeblich ausschließlich bestimmt durch den Versatz, den die Schräge des Zapfens erzeugt.

Insgesamt ist somit das Blockschloss gegenüber den aus dem Stand der Technik bekannten Blockschlosshälften verbessert, da ein besonders kurzer Verriegelungsweg ermöglicht wird, was die Handhabung in einer Rinne eines Kettentrums für einen anwendenden Monteur erheblich erleichtert.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese zeigen:
- Figur 1: ein erfindungsgemäßes Blockschloss in perspektiver Ansicht mit zwei Kettenenden,
- Figur 2: eine Blockschlosshälfte in perspektivischer Ansicht,
- Figur 3: das Blockschloss in Figur 1 in Seitenansicht,
- Figur 4: eine Querschnittsansicht gemäß Schnitt A-A aus Figur 3 und
- Figur 5a: eine Längsschnittansicht des Blockschlosses gemäß B-B aus Figur 4 und
- Figur 5b: eine Detailansicht von Figur 5a.

In den Figuren werden für gleiche oder ähnliche Bauteile dieselben Bezugszeichen verwendet, auch wenn eine wiederholte Beschreibung aus Vereinfachungsgründen entfällt.

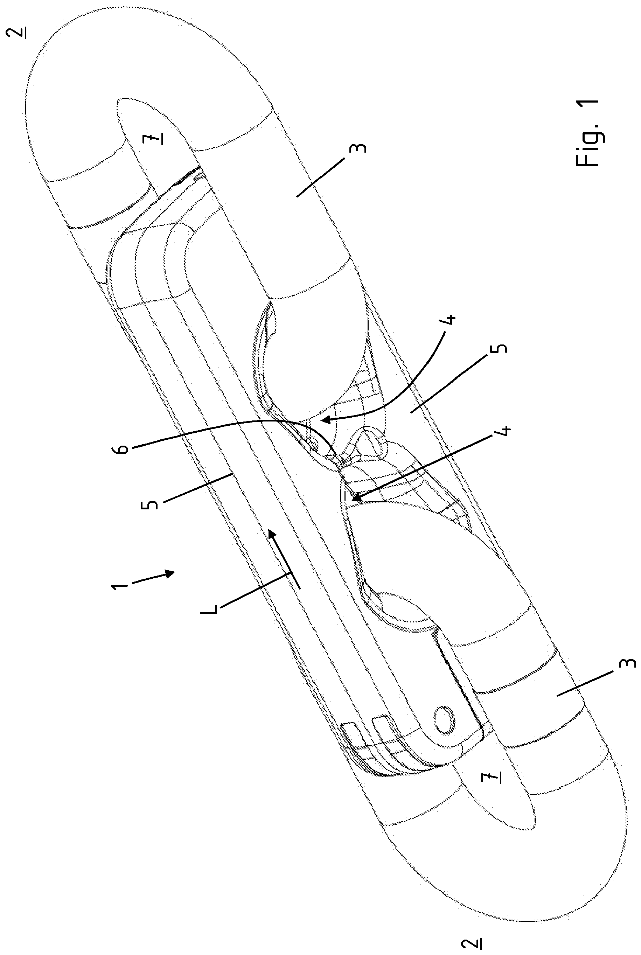

Figur 1 zeigt ein erfindungsgemäßes Blockschloss 1 zur Verbindung zweier Kettenenden 2. Ein jeweiliges Kettenende 2 ist durch ein liegendes Kettenglied 3 dargestellt. Das jeweilige Kettenglied 3 ist in einer Aufnahmeöffnung 4 in dem Blockschloss 1 aufgenommen. Das Blockschloss 1 selbst ist ausgebildet durch zwei Blockschlosshälften 5, die sich jeweils in einer Längsrichtung L erstrecken. Beide Blockschlosshälften 5 sind im Wesentlichen komplementär bzw. spiegelsymmetrisch zueinander ausgebildet. Zwischen den zwei Blockschlosshälften 5 ist ein Steg 6 ausgebildet. Der Steg 6 trennt die zwei Aufnahmeöffnungen 4 voneinander. An einem jeweiligen Ende 7 des Blockschlosses 1 greifen die Blockschlosshälften 5 kammartig ineinander.

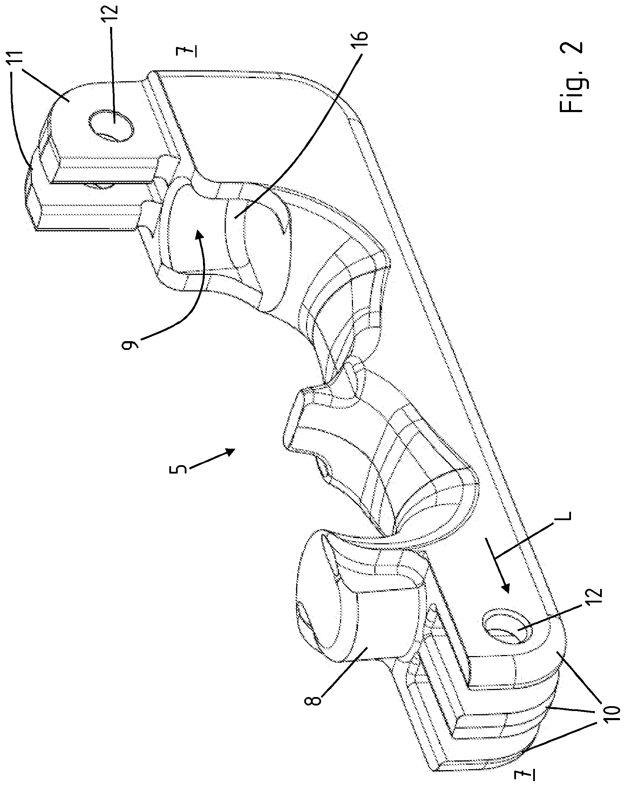

Dies wird insbesondere ersichtlich in der perspektivischen Darstellung in Figur 2. Figur 2 zeigt eine perspektivische Ansicht auf eine Blockschlosshälfte 5. Die nicht dargestellte zweite Blockschlosshälfte ist im Wesentlichen spiegelsymmetrisch dazu ausgebildet. Im Bereich eines Endes 7 weist die Blockschlosshälfte 5 hierzu einen Zapfen 8 auf sowie auf der gegenüberliegenden Seite eine Zapfenaufnahme 9. Nunmehr kommt die nicht dargestellte Blockschlosshälfte mit ihrem nicht dargestellten Zapfen in der hier dargestellten Zapfenaufnahme 9 zur Anlage. Die nicht dargestellte Blockschlosshälfte weist ebenfalls eine Zapfenaufnahme auf, in welcher der hier dargestellte Zapfen 8 ebenfalls formschlüssig zur Anlage kommt.

Erfindungsgemäß ist nunmehr vorgesehen, dass am Ende 7 der Blockschlosshälfte 5 unterhalb des Zapfens 8 und in Längsrichtung L gegenüber dem Zapfen 8 überstehend drei kammartige Gabelfortsätze 10 ausgebildet sind. Die Gabelfortsätze 10 sind parallel zueinander angeordnet. An dem gegenüberliegenden Ende 7 der Blockschlosshälfte 5 sind zwei Fortsätze 11 parallel zueinander angeordnet. Die Fortsätze 11 sind in Längsrichtung L zum Ende hin hinter der Zapfenaufnahme 9 angeordnet. Quer zur Längsrichtung L stehen sie gegenüber der Zapfenaufnahme 9 über.

Nunmehr greifen die Fortsätze 11 einer Blockschlosshälfte 5 kammartig in die Gabelfortsätze 10 der anderen Blockschlosshälfte ein. Dieses kammartige Ineinandergreifen kann sowohl in Längsrichtung L geschehen, jedoch auch quer zur Längsrichtung L. Hier liegt der erfindungswesentliche Vorteil. Der Verschiebeweg in Längsrichtung L wird somit nur bestimmt durch die Schräge des Zapfens 8 und der Zapfenaufnahme 9. Ferner ist in einem Nutgrund der Zapfenaufnahme 9 ein Freistich 16 ausgebildet. Dieser verringert die entstehenden Spannungen, insbesondere in der Zapfenaufnahme 9 bei verriegeltem Blockschloss 1.

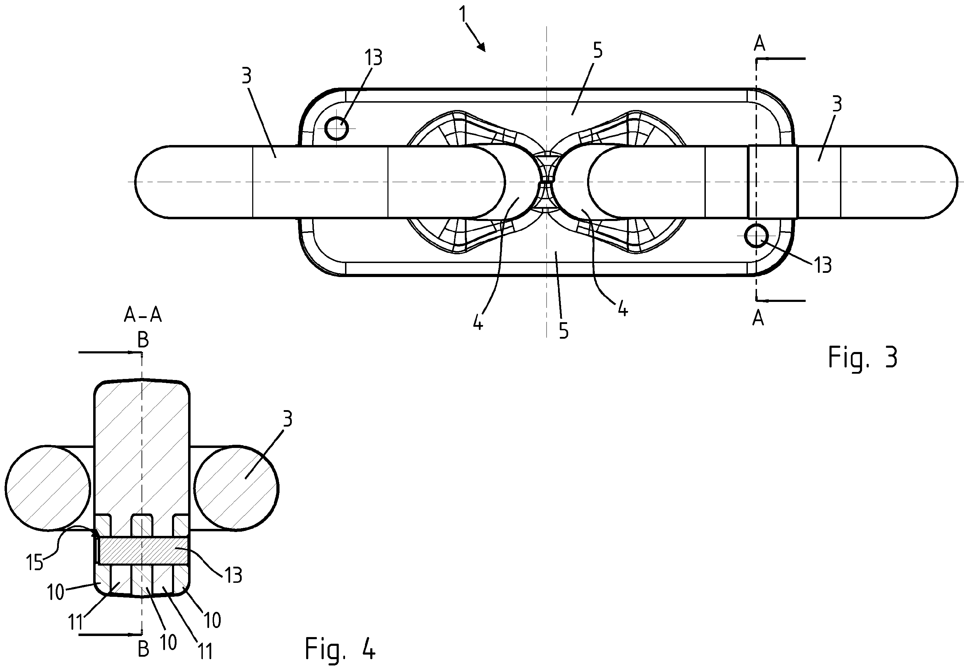

Zur Verriegelung untereinander weisen die Gabelfortsätze 10 sowie auch die Fortsätze 11 eine jeweilige Öffnung 12 auf, in die ein Fixiermittel 13 eingesetzt werden kann, insbesondere ein Fixierbolzen dargestellt in den Figuren 3 bis 5.

Figur 3 zeigt eine Seitenansicht auf das erfindungsgemäße Blockschloss 1 im verriegelten Zustand. Die beiden Blockschlosshälften 5 sind ineinander verriegelt.

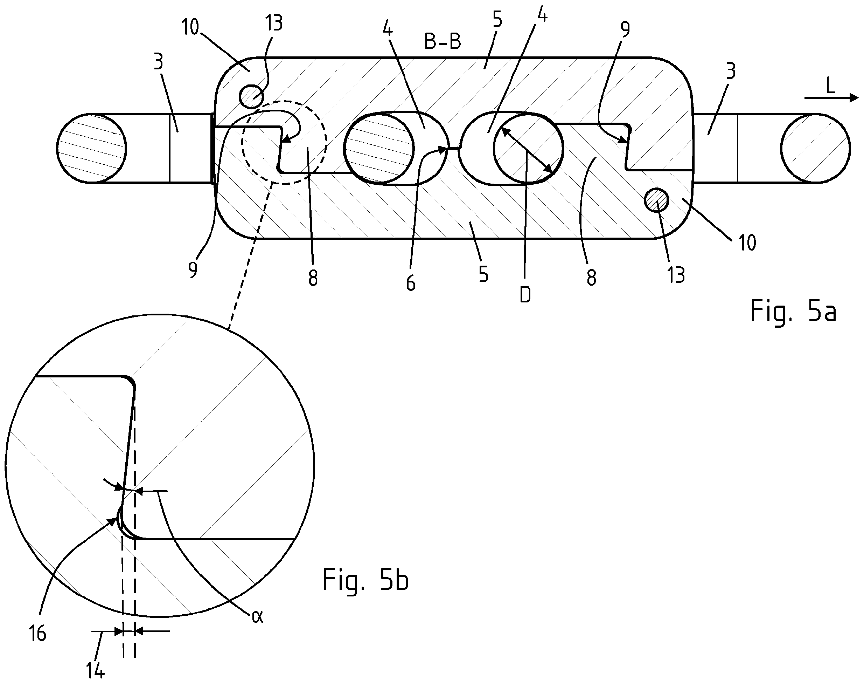

Gemäß der Längsschnittansicht in Figur 5a und insbesondere der Detailansicht Figur 5b, welche entlang der Schnittlinie B-B aus Figur 4 hergestellt, ist ersichtlich, dass der Verschiebeweg 14 in Längsrichtung L sich ausschließlich aus dem Versatz bzw. dem Winkel α des Zapfens 8 ergibt. Der Winkel α des Zapfens 8 zusammen mit der Höhe des Zapfens 8, welche sich quer zur Längsrichtung L erstreckt, ergibt dann den maximalen Verschiebeweg 14, der notwendig ist, um das erfindungsgemäße Kettenschloss in Längsrichtung zu verriegeln. Wird die Kette in Längsrichtung L mit einer Zugkraft beaufschlagt, so drücken die beiden Blockschlosshälften 5 quer zur Längsrichtung L aufeinander zu aufgrund der winkeligen Anordnung von Zapfen 8 und Zapfenaufnahme 9 zueinander.

Figur 4 zeigt als Querschnittsansicht im verriegelten Zustand das kammartige Ineinandergreifen der Fortsätze 11 und Gabelfortsätze 10 sowie das Einführen eines Sicherungsbolzens als Fixiermittel 13. Bevorzugt kann beispielsweise in einem Gabelfortsatz 10 ein Stufenabsatz 15 ausgebildet sein, so dass der Sicherungsbolzen nur einseitig einsetzbar und durch den Stufenabsatz 15 nicht auf der auf die Bildebene gezeigten linken Seite herausgedrückt wird.

In Figur 5b ist der Verschiebeweg 14 dargestellt. Dieser ist bevorzugt kleiner 10 % des in Figur 5a dargestellten Durchmessers des Kettengliedes 3. Die Erfindung betrifft somit auch eine Blockschlossanordnung, umfassend das Blockschloss sowie mindestens ein damit gekoppeltes Kettenglied.

### Bezugszeichen:

- 1 -: Blockschloss
- 2 -: Kettenende
- 3 -: Kettenglied
- 4 -: Aufnahmeöffnung
- 5 -: Blockschlosshälfte
- 6 -: Steg
- 7 -: Ende zu 1/5
- 8 -: Zapfen
- 9 -: Zapfenaufnahme
- 10 -: Gabelfortsatz
- 11 -: Fortsatz
- 12 -: Öffnung
- 13 -: Fixiermittel
- 14 -: Verschiebeweg
- 15 -: Stufenabsatz
- 16 -: Freistich

- L -: Längsrichtung
- α-: Winkel
- D -: Durchmesser

## Patentansprüche

1. Blockschlossanordnung aufweisend ein Blockschloss (1) zur Verbindung zweier Kettenenden (2) und mindestens ein damit gekoppeltes Kettenglied (3), wobei das Blockschloss (1) im verriegelten Zustand zwei gegenüberliegende sich in Längsrichtung (L) erstreckende Blockschlosshälften (5) aufweist, welche formschlüssig über je einen Zapfen (8) und eine Zapfenaufnahme (9) ineinandergreifen und unter Ausbildung mindestens einer Aufnahmeöffnung, bevorzugt zweier Aufnahmeöffnungen, zur Aufnahme eines jeweiligen Kettengliedes (3) eines Kettenendes (2) verriegeln und dass die Blockschlosshälften (5) an ihren Enden (7) kammartig ineinandergreifen, wobei die Längsrichtung (L) des Blockschlosses (1) in Richtung der Kettenlängsrichtung zur Übertragung einer Zugkraft orientiert ist, **dadurch gekennzeichnet, dass** beide Blockschlosshälften (5) über einen Verschiebeweg (14) in Längsrichtung (L) miteinander verriegelt werden, wobei der Verschiebeweg (14) kleiner 10 % des Durchmessers (D) eines Kettengliedes (3) ist.

2. Blockschloss (1) nach Anspruch 1, **dadurch gekennzeichnet, dass** an einem Ende (7) einer Blockschlosshälfte (1) eine Verlängerung ausgebildet ist, welche mindestens zwei, insbesondere drei kammartige Gabelfortsätze (10) aufweist.

3. Blockschloss (1) nach Anspruch 2, **dadurch gekennzeichnet, dass** die Verlängerung unterhalb des Zapfens (8) angeordnet ist und in Längsrichtung (L) gegenüber dem Zapfen (8) übersteht.

4. Blockschloss (1) nach einem der Ansprüche 1 bis 3, **dadurch gekennzeichnet, dass** an einem anderen Ende (7) einer Blockschlosshälfte (5) ein Fortsatz (11) ausgebildet ist, insbesondere sind zwei Fortsätze (11) parallel nebeneinander ausgebildet.

5. Blockschloss (1) nach Anspruch 4, **dadurch gekennzeichnet, dass** die Fortsätze (11) gegenüber der Zapfenaufnahme (9) überstehen, insbesondere quer zur Längsrichtung (L)

6. Blockschloss (1) nach einem der Ansprüche 1 bis 5, **dadurch gekennzeichnet, dass** beide Blockschlosshälften (5) im Wesentlichen spiegelsymmetrisch zueinander ausgebildet sind.

7. Blockschloss (1) nach einem der Ansprüche 2 bis 6, **dadurch gekennzeichnet, dass** bei verriegeltem Blockschloss (1) die Fortsätze (11) kammartig in die Gabelfortsätze (10) eingreifen.

8. Blockschloss (1) nach einem der vorangehenden Ansprüche, **dadurch gekennzeichnet, dass** ein Sicherungsbolzen quer zur Längsrichtung (L) formschlüssig die Gabelfortsätze (10) und Fortsätze (11) durchgreifend eingesetzt ist.

9. Blockschloss (1) nach einem der Ansprüche 1 bis 8 , **dadurch gekennzeichnet, dass** der Zapfen (8) eine Schräge aufweist, welche einen Winkel (α) zwischen 4 und 8 Grad, bevorzugt 5 bis 7 und ganz besonders bevorzugt von 6 Grad zu einer Orthogonalen zur Längsrichtung (L) aufweist.

10. Blockschloss (1) nach einem der Ansprüche 1 bis 9, **dadurch gekennzeichnet, dass** in einem Nutgrund der Zapfenaufnahme (9) ein Freistich (16) ausgebildet ist

## Claims

1. Block lock arrangement having a block lock (1) for connecting two chain ends (2) and at least one chain link (3) coupled thereto, wherein the block lock (1) in the locked state has two opposing block lock halves (5) which extend in the longitudinal direction (L) and which interengage in a form-fitting manner by way of a respective stub (8) and a stub receptacle (9) and form at least one receiving opening, preferably two receiving openings, for receiving a respective chain link (3) of a chain end (2), and the block lock halves (5) interengage in a comb-like manner at their ends (7), wherein the longitudinal direction (L) of the block lock (1) is oriented in the direction of the chain longitudinal direction in order to transmit a tensile force, **characterised in that** the two block lock halves (5) are locked together over a displacement path (14) in the longitudinal direction (L), wherein the displacement path (14) is smaller than 10% of the diameter (D) of a chain link (3).

2. Block lock (1) according to claim 1, **characterised in that** an extended portion is formed at one end (7) of a block lock half (1), which extended portion has at least two, in particular three, comb-like fork extensions (10).

3. Block lock (1) according to claim 2, **characterised in that** the extended portion is arranged below the stub (8) and projects in the longitudinal direction (L) in relation to the stub (8).

4. Block lock (1) according to any one of claims 1 to 3, **characterised in that** an extension (11) is formed at another end (7) of a block lock half (5), in particular two extensions (11) are formed in parallel one beside the other.

5. Block lock (1) according to claim 4, **characterised in that** the extensions (11) project in relation to the stub receptacle (9), in particular transversely to the longitudinal direction (L).

6. Block lock (1) according to any one of claims 1 to 5, **characterised in that** the two block lock halves (5) are designed to be substantially mirror-symmetrical relative to one another.

7. Block lock (1) according to any one of claims 2 to 6, **characterised in that**, when the block lock (1) is locked, the extensions (11) engage in a comb-like manner in the fork extensions (10).

8. Block lock (1) according to any one of the preceding claims, **characterised in that** a securing bolt is inserted transversely to the longitudinal direction (L) in a form-fitting manner, engaging through the fork extensions (10) and extensions (11).

9. Block lock (1) according to any one of claims 1 to 8, **characterised in that** the stub (8) has a slope which has an angle (a) of between 4 and 8 degrees, preferably 5 to 7 and most preferably of 6 degrees to an orthogonal in relation to the longitudinal direction (L).

10. Block lock (1) according to any one of claims 1 to 9, **characterised in that** an undercut (16) is formed in a groove base of the stub receptacle (9).

## Revendications

1. Agencement de serrure de blocage présentant une serrure de blocage (1) pour relier deux extrémités de chaîne (2) et au moins un maillon de chaîne (3) couplé à celles-ci, dans lequel la serrure de blocage (1) présente, à l'état verrouillé, deux moitiés de serrure de blocage (5) opposées s'étendant dans la direction longitudinale (L), lesquelles s'engagent l'une dans l'autre par complémentarité de forme par l'intermédiaire respectivement d'un tourillon (8) et d'un logement de tourillon (9) et, en formant au moins une ouverture de réception, de préférence deux ouvertures de réception, pour recevoir un maillon de chaîne (3) respectif d'une extrémité de chaîne (2), et en ce que les moitiés de serrure de blocage (5) s'engagent l'une dans l'autre à leurs extrémités (7) à la manière d'un peigne, dans lequel la direction longitudinale (L) de la serrure de blocage (1) est orientée dans la direction de la direction longitudinale de la chaîne pour transmettre une force de traction, **caractérisé en ce que** les deux moitiés de serrure de blocage (5) sont verrouillées ensemble par une course de déplacement (14) dans la direction longitudinale (L), dans lequel la course de déplacement (14) est inférieure à 10 % du diamètre (D) d'un maillon de chaîne (3).

2. Serrure de blocage (1) selon la revendication 1, **caractérisée en ce qu'**une partie étendue est formée à une extrémité (7) d'une moitié de serrure de blocage (1), lequel présente au moins deux, en particulier trois prolongements de fourche (10) en forme de peigne.

3. Serrure de blocage (1) selon la revendication 2, **caractérisée en ce que** la partie étendue est agencée en dessous du tourillon (8) et dépasse dans la direction longitudinale (L) par rapport au tourillon (8).

4. Serrure de blocage (1) selon l'une quelconque des revendications 1 à 3, **caractérisée en ce qu'**un prolongement (11) est formé à une autre extrémité (7) d'une moitié de serrure de blocage (5), en particulier deux prolongements (11) sont formés parallèlement l'un à côté de l'autre.

5. Serrure de blocage (1) selon la revendication 4, **caractérisée en ce que** les prolongements (11) dépassent par rapport au logement de tourillon (9), en particulier transversalement à la direction longitudinale (L).

6. Serrure de blocage (1) selon l'une quelconque des revendications 1 à 5, **caractérisée en ce que** les deux moitiés de serrure de blocage (5) sont réalisées de manière sensiblement symétrique l'une par rapport à l'autre.

7. Serrure de blocage (1) selon l'une quelconque des revendications 2 à 6, **caractérisée en ce que**, lorsque la serrure de blocage (1) est verrouillée, les prolongements (11) s'engagent à la manière d'un peigne dans les prolongements de fourche (10).

8. Serrure de blocage (1) selon l'une quelconque des revendications précédentes, **caractérisée en ce qu'**un boulon de sécurité est inséré transversalement à la direction longitudinale (L) en traversant par complémentarité de forme les prolongements de fourche (10) et les prolongements (11).

9. Serrure de blocage (1) selon l'une quelconque des revendications 1 à 8, **caractérisée en ce que** le tourillon (8) présente un biseau qui forme un angle (a) compris entre 4 et 8 degrés, de préférence entre 5 et 7, et le plus préférentiellement de 6 degrés par rapport à une orthogonale à la direction longitudinale (L).

10. Serrure de blocage (1) selon l'une quelconque des revendications 1 à 9, **caractérisée en ce qu'**un dégagement (16) est formé dans un fond de rainure du logement de tourillon (9).
